(19) **Europäisches Patentamt**

**European Patent Office**

**Office européen des brevets**

(11) **EP 1 731 931 A1**

(12) **EUROPEAN PATENT APPLICATION**
published in accordance with Art. 158(3) EPC

(43) Date of publication:
**13.12.2006 Bulletin 2006/50**

(51) Int Cl.:
**G02B 5/18** (2006.01)          **G02B 5/30** (2006.01)
**G02B 1/10** (2006.01)

(21) Application number: **05727995.2**

(22) Date of filing: **31.03.2005**

(86) International application number:
**PCT/JP2005/006318**

(87) International publication number:
**WO 2005/096037 (13.10.2005 Gazette 2005/41)**

(84) Designated Contracting States:
**DE FR GB**

(30) Priority: **31.03.2004 JP 2004107094**

(71) Applicants:
• **OHMI, Tadahiro**
  **Sendai-shi,**
  **Miyagi 980-0813 (JP)**
• **ZEON CORPORATION**
  **Tokyo 100-8246 (JP)**

(72) Inventors:
• **OHMI, Tadahiro**
  **Sendai-shi,**
  **Miyagi 9800813 (JP)**

• **TANAHASHI, Naoki**
  **Sendai-shi,**
  **Miyagi 9800000 (JP)**
• **HAYASHI, Masahiko,**
  **ZEON CORPORATION**
  **Tokyo 1008323 (JP)**

(74) Representative: **Albrecht, Thomas et al**
  **Kraus & Weisert**
  **Patent- und Rechtsanwälte**
  **Thomas-Wimmer-Ring 15**
  **80539 München (DE)**

(54) **OPTICAL MEMBER AND MANUFACTURING METHOD THEREOF**

(57)     An optical member utilizing diffraction, which comprises a substrate having a fine structure comprising microstructures with an interval of 50-1,000 nm between the adjacent microstructures on a substrate surface, wherein the substrate has a surface layer portion comprising a region containing fluorine atoms in an amount larger than that in the inner layer portion thereof. The microstructures are preferably micro-protrusions each tapering toward the tip in the direction perpendicular to the substrate surface. The optical member is manufactured by a method comprising a step of exposing the surface of the substrate having a fine structure comprising microstructures with an interval of 50-1, 000 nm between the adjacent microstructures to an atmosphere containing a fluorine gas.

FIG. 3

**Description**

Technical Field

This invention relates to an optical member and a method for manufacturing the same. More particularly it relates to an optical member characterized as exhibiting reduced deterioration with time in optical properties such as a refletance and a retardation.

Background Art

An optical member having periodical microstructures on the surface of a substrate thereof and thus utilizing diffraction occurring due to the microstructures is known. In the case when the period of microstructures in the optical member is sufficiently shorter than the wavelength of light used, diffracted light becomes zeroth-order and can be regarded as equivalent to light propagating through a homogeneous medium. The refractive index as responsive to the light propagating through a homogeneous medium is an effective refractive index which is different from a refractive index inherent to the substance thereof. It is known that, by imparting anisotropy to the above-mentioned microstructures or forming a chirp structure, a birefringence structure or non-reflecting structure can be attained, as proposed, for example, in M. Born and E. Wolf: Principles of Optics, and S. J. Wilson and M. C. Hutley: Octa. Acta., 29 (1982) 993.

Optical members utilizing diffraction occurring due to microstructures, such as an anti-reflection plate, a phase plate (wavelength plate) and a diffraction grating, which are manufactured by applying a superfine machining technique developed in a semiconductor field, have been proposed and evaluated in recent years in many documents, for example, in Japanese Unexamined Patent Publication (hereinafter abbreviated to "JP-A") No. H5-107412, JP-A H9-167758, JP-A 2003-207636, JP-A 2003-248118, Jpn. J. Appl. Phys., vol. 39 (2000), p735-737, and Jpn. J. Appl. Phys., vol. 40 (2001), p747-749.

To manufacture the above-mentioned optical member utilizing diffraction, a superfine machining must be conducted with high precision. However, the superfine machining is costly and thus the use of the optical members utilizing diffraction in various fields is limited. Further the optical member utilizing diffraction has a problem such that the microstructures formed by a superfine machining are occasionally damaged or stained with dust or others during transportation or at assembling step, and therefore a satisfying intended performance is often difficult to attain.

Disclosure of the Invention

Problems to Be Solved by the Invention

A primary object of the present invention is to solve the above-mentioned problems arising in the prior art, and provide an optical member utilizing diffraction which exhibits reduced deterioration with time in optical properties such as a reflectance and a retardation, and which is not easily damaged nor stained with dust or others during transportation or at assembling step.

Means for Solving the Problems

With the view to achieving the above-mentioned obj ect, the present inventors made researches and found that, by contacting an optical member substrate having microstructures on the surface thereof with a fluorine gas, a region containing fluorine atoms in an amount larger than that in the inner layer portion can be formed in a surface layer portion of the substrate; and further found that the above-mentioned object can be achieved by the optical member utilizing diffraction with the substrate having a surface portion comprising a region containing fluorine atoms in an amount larger than that in the inner layer portion. The present invention has been completed on the basis of these findings.

Thus, in one aspect of the present invention, there is provided an optical member utilizing diffraction, which comprises a substrate having a fine structure comprising microstructures with an interval from 50 to 1, 000 nm between the adjacent microstructures on a surface of the substrate, wherein said substrate has a surface layer portion comprising a region containing fluorine atoms in an amount larger than that in the inner layer portion of the substrate.

In preferred embodiments, the above-mentioned fine structure is a moth-eye structure; and the substrate has a refractive index in the range from 1. 4 to 1. 9 and the microstructures are micro-protrusions each tapering toward the tip in the direction perpendicular to the substrate surface.

In another aspect of the present invention, there is provided a method for manufacturing an optical member utilizing diffraction, which comprises a step of exposing a surface of a substrate having a fine structure comprising microstructures with an interval from 50 to 1, 000 nm between the adjacent microstructures on the surface of the substrate, to an atmosphere containing a fluorine gas.

In preferred embodiments, the above-mentioned method for manufacturing an optical member comprises a step of placing the substrate in an inert gas-containing atmosphere, or in the air under reduced pressure, prior to the step of exposing the substrate surface to a fluorine-gas containing atmosphere; and further comprises a step of placing the substrate again in an inert gas-containing atmosphere, or in the air under reduced pressure, after the step of exposing the substrate surface to the fluorine-gas containing atmosphere. The fine structure of substrate is preferably a moth-eye structure. Preferably the above-mentioned substrate has a refractive index in the range from 1.4 to 1.9 and the microstructures are micro-protrusions tapering toward each tip in the direction perpendicular to the substrate surface.

The fluorine gas-containing atmosphere preferably further contains an inert gas, and the concentration of fluorine gas is in the range from 0.1 to 50% by weight.

In preferred embodiments, the content of each of oxygen and moisture in the substrate immediately before the step of exposing to the fluorine-gas containing atmosphere is not larger than 1% by weight; and the concentration of each of oxygen and moisture in the fluorine gas-containing atmosphere is not larger than 100 ppm by weight. The surface of the substrate is exposed to the fluorine gas-containing atmosphere while the surface of the substrate is maintained at a temperature in the range from -50 to 150°C.

When the substrate is placed in an inert gas-containing atmosphere, prior to the step of exposing to a fluorine-gas containing atmosphere, or after the step of exposing to the fluorine-gas containing atmosphere, the substrate is preferably maintained at a temperature in the range from 60 to 180°C. When the substrate is placed in the air under reduced pressure, prior to the step of exposing to the fluorine-gas containing atmosphere, or after the step of exposing to the fluorine-gas containing atmosphere, the substrate is preferably maintained in the air under a pressure in the range from 1 to 500 mmHg, and at a temperature in the range from 15 to 100°C.

Effect of the Invention

The optical member utilizing diffraction according to the present invention is characterized as exhibiting reduced deterioration with time in optical properties such as a reflectance and a retardation, and being not stained with dust or others at manufacturing step, during transportation or at assembling step.

Brief Explanation of the Drawings

Fig. 1 is a perspective illustration of a structure composed of two kinds of flat isotropic dielectric plates which are laminated in parallel.
Fig. 2 is a diagram illustrating a planar lattice structure composed of square pillars C having a refractive index $n_c$ arranged at an equal interval on a substrate.
Fig. 3 is a diagram illustrating a planar lattice structure composed of circular cones having a refractive index $n_D$ arranged at an equal interval on a substrate.
Fig. 4 is a diagram illustrating an example of a reaction apparatus used in the method of manufacturing the optical member according to the present invention.

The reference numerals and characters in the figures are as follows.

A: flat plate having a refractive index $n_A$
B: flat plate having a refractive index $n_B$
C: square pillar having a refractive index $n_c$
D: circular cone having a refractive index $n_D$
1: chamber
2: fluorine gas feed line
3: inert gas feed line
4: exhaust line
5: heating apparatus
6: substrate having microstructures

Best Mode for Carrying Out the Invention

The optical member according to the present invention is an optical member utilizing diffraction, which comprises a substrate having a fine structure comprising periodic microstructures with an interval from 50 to 1, 000 nm between the adjacent microstructures on a surface of the substrate, wherein said substrate has a surface layer portion comprising a region containing fluorine atoms in an amount larger than that in the inner layer portion of the substrate.

By the term "microstructures" as used herein we mean micro-protrusions or micro-holes which are formed on the surface of substrate. Preferably the microstructures comprise micro-protrusions having a height in the range from 5 nm to 100 $\mu$m and/or micro-holes having a depth in the range from 5 nm to 100 $\mu$m.

More specifically the optical member according to the present invention has specific microstructures periodically occurring at a minute interval not longer than the wavelength of light incident on or emitting from the surface thereof.

The fine structure comprising the microstructures according to the present invention will be explained with reference to the light diffraction occurring due to the microstructures.

In the region of refractive index $n_A$ and refractive index $n_B$ where the period of microstructures is sufficiently shorter than the wavelength of light, the refractive index of light propagating in this region becomes an effective refractive index which is different from a refractive index inherent to the substance thereof.

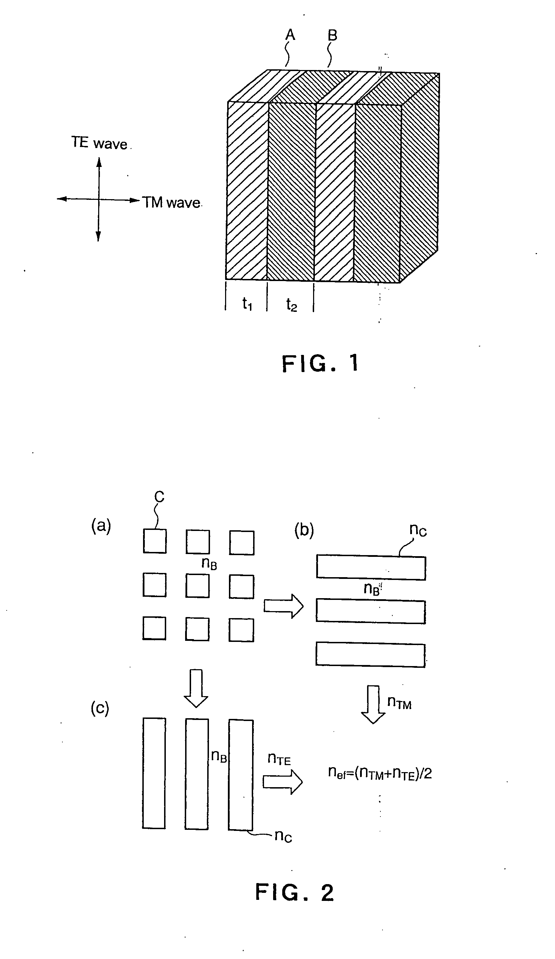

Before going into the explanation of the optical member according to the present invention, the principle of effective refractive index will be explained by reference to Fig 1 illustrating a structure composed of two kinds of flat isotropic dielectric plates A and B which are laminated in parallel.

In the case when the flat plate A having a refractive index $n_A$ and the flat plate B having a refractive index $n_B$ are arranged at a period sufficiently shorter than the wavelength of light, anisotropy is produced in the refractive index $n_{TE}$ (TE wave) of light having a polarization direction parallel to the flat plate A and the flat plate B, and the refractive index $n_{TM}$ (TM wave) of light having a polarization direction perpendicular to the flat plate A and the flat plate B. TE wave and TM wave are expressed by the following formulae (1) and (2).

$$\text{Formula (1)} : n_{TE} = \sqrt{(fn_A^2 + (1-f)n_B^2)}$$

$$\text{Formula (2)} : n_{TM} = \sqrt{(n_A^2 n_B^2/(fn_B^2 + (1-f)n_A^2)}$$

In the formulae (1) and (2), f refers to a duty ratio of width $t_1$ of $n_A$ portion in the microstructures to width $t_2$ of $n_B$ portion in the microstructure. f is represented by the following formula (3) .

$$\text{Formula (3)} : f = t_1/(t_1 + t_2)$$

Therefore, even in the case when an isotropic medium is used, by forming fine anisotropic structures, characteristics can be manifested which are obtained as if an anisotropic medium is used. To be exact, a more accurate effective refractive index nef can be obtained by calculation using the effective medium theory (EMT) according to numerical calculation depending upon the period of microstructures and the wavelength of light.

The birefringence thus obtainable from the microstructures (which is hereinafter referred to as "structural birefringence" when appropriate) is greatly dependent upon the refractive index difference inherent to the substance. To obtain a large structural birefringence, the difference between refractive index $n_A$ and refractive index $n_B$ is preferably rendered large. Usually the portion of refractive index $n_A$ is formed from micro-protrusions made from, for example, glass or a transparent resin, on the substrate, and the portion of refractive index $n_B$ is formed from air present around each micro-protrusion.

In the case of the linear structure composed of flat plate A and flat plate B are laminated in parallel, as illustrated in Fig. 1, an anisotropy is inevitably manifested. In contrast, in the case when the planar lattice structure composed of square pillars C having a refractive index $n_c$ arranged at an equal interval on a substrate (air around each square pillar has a refractive index $n_B$), as illustrated in Fig. 2, an isotropy is manifested. In the latter case the effective refractive index can easily be calculated, although the mathematical accuracy may not be high.

When the effective refractive index of the planar lattice structure as illustrated in Fig. 2 (a) is determined, the structure is converted to the linear structure as illustrated in Fig. 2(b) according to the above-mentioned formula (1), and then the refractive index $n_{TM}$ is calculated according to the above-mentioned formula (2). Further, the structure is converted to the linear structure as illustrated in Fig. 2(c) according to the above-mentioned formula (2), and then the refractive index $n_{TE}$ is calculated according to the above-mentioned formula (1). Finally the effective refractive index nef can be calculated as an average value of $n_{TM}$ and $n_{TE}$.

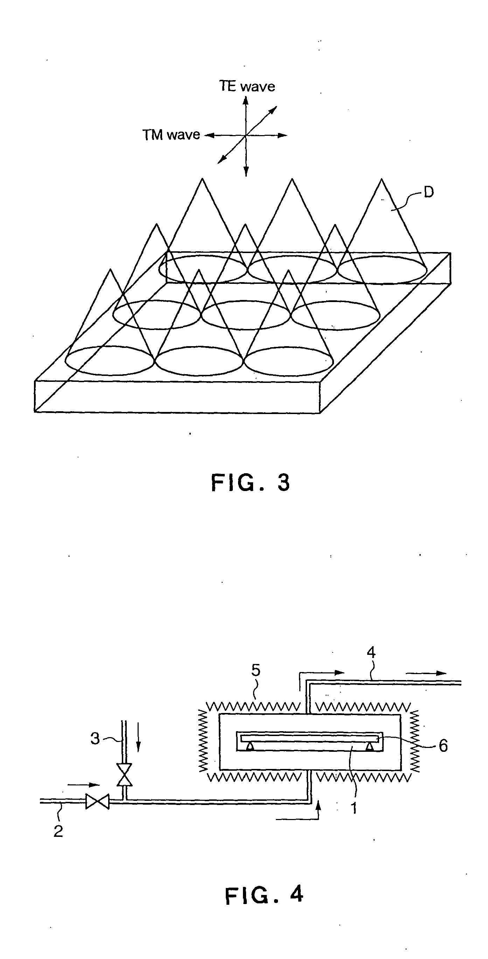

In the case of a planar lattice structure composed of circular cones D having a refractive index $n_D$ arranged at an equal interval on a substrate, as illustrated in Fig. 3, the effective refractive index can be calculated on the basis of a principle similar to the above-mentioned planar lattice structure as illustrated in Fig. (2). The planar lattice structure is cut into layers in the direction perpendicular to the surface of substrate. The section of each layer can be regarded as closely resemble a planar lattice structure composed of circular pillars. Thus the effective refractive index of each layer can be calculated for the respective planar lattice structures of circular pillars with different diameters. In the planar lattice structure of circular cones, the diameter of circular cones gradually decreases toward the tip of each cone. Therefore, the effective refractive indexes obtained from the layers cut from the circular cones gradually and continuously vary toward the tip of each cone. The microstructures having the planar lattice structure composed of circular cones give a non-reflective surface. A typical example of the microstructure giving non-reflective surface is a moth-eye structure. The microstructure giving non-reflective surface further includes, for example, those which are described in JP-A H5-107412, JP-A H9-167758, JP-A 2003-207636, JP-A 2003-248118, M. Born and E. Wolf: Principles of Optics, and S. J. Wilson and M. C. Hutley: Octa. Acta., 29 (1982) 993; Jpn. J. Appl. Phys., vol. 39 (2000), p735-737; and Jpn. J. Appl. Phys., vol. 40 (2001), p747-749.

The material used for the substrate of the optical member according to the present invention is not particularly limited provided that it is a transparent material. The material for the substrate includes optical glass and a transparent plastic material. As specific examples of the optical glass, there can be mentioned silica glass, borosilicate crown glass, lead-containing flint glass, barium glass, lanthanum glass containing lanthanum and other rare earth elements, and chalcogenide glass. Of these, silica glass is preferable.

As specific examples of the transparent plastic material, there can be mentioned acrylic polymers such as polymethyl methacrylate, styrene polymers such as polystyrene, chain-like olefin polymers such as polypropylene and poly-4-methylpentene-1, alicyclic structure-containing polymers, polyesters such as polyethylene terephthalate and polyethylene naphthalate, polycarbonate, polyether sulfone, and polyamides. Of these, alicyclic structure-containing polymers are preferable.

Preferably, the substrate has a refractive index in the range of 1.4 to 1.9 and the microstructures thereof include micro-protrusions each tapering toward the tip in the direction perpendicular to the substrate surface, and further include those having micro-protrusions and micro-holes. A moth-eye structure is especially preferable. By the term "moth-eye structure" as used herein we mean a fine structure comprising micro-protrusions each tapering toward the tip formed on the surface, wherein the refractive index is continuously varied and hence the light reflection is greatly reduced. The above-mentioned refractive index $n_A$ is measured by using light having a wavelength from 300 to 1,600 nm. By the microstructures comprising micro-protrusions each tapering toward the tip in the direction perpendicular to the substrate surface, the reflectivity at the boundary surface between the substrate and the atmosphere (usually air) can be greatly reduced face

The above-mentioned refractive index $n_A$ in the range from 1.4 to 1.9 refers to the refractive index of the non-fluorinated portion of the substrate.

In the substrate used in the present invention, the microstructures have an interval from 50 to 1,000 nm, preferably from 50 to 600 nm, between the adjacent microstructures. By providing the microstructures having such intervals, reflectivity of oblique incident light can also be reduced.

The interval between the adjacent microstructures refers to the distance spanning from the center of a microstructure to the center of the adjacent microstructure. In the case when the microstructures do not have a symmetrical structure, the interval between the adjacent microstructures refers to a distance spanning from the top of a tapered protrusion to the top of the adjacent tapered protrusion, or a distance spanning from the deepest point of a micro-hole to the deepest point of the adjacent micro-hole, or a distance spanning from the top of a tapered protrusion to the deepest point of the adjacent micro-hole. When these distances are different among the microstructures, the interval between the adjacent microstructures refers to an average value of the distances.

In the substrate used in the present invention, the microstructures are preferably periodic structures with a certain interval between the adjacent microstructures, but, when an optical member having a minimized reflectivity is manufactured, the microstructures of the substrate may not be a complete periodic structure. In this case, the height of the microstructures must be at least equal to the ratio of the wavelength of light used to the maximum value of the refractive index of the microstructures The height of the microstructures is preferably at least 200 nm, more preferably at least 600 nm. If the height of the microstructures is smaller than these values, the microstructures cannot be recognized by light beams, and thus, a non-reflection structure cannot be obtained.

When an optical member having a birefringence is manufactured, the microstructures of the substrate with a certain interval may or may not be a periodic structure, provided that the interval between the adjacent microstructures is in the above-mentioned ranges. If the microstructures of the substrate with a certain interval is a periodic structure, the change in the double refraction difference becomes sensitive to the wavelength of light. When the optical member according to the present invention is used for a phase plate for changing retardation relative to the wavelength of light, such as a broad-band phase plate, the microstructures of the substrate with a certain interval is preferably periodic. In this case, the height of the microstructures can be appropriately determined depending upon the target phase difference.

The substrate preferably has a light transmittance of at least 80%, more preferably at least 86%, and a haze of not larger than 2%, more preferably not larger than 1%.

The means for forming microstructures on the surface of substrate can be varied depending upon the particular material for the substrate. The means for forming microstructures on the substrate of optical glass or a plastic material will be explained as typical examples of the material for substrate.

The formation of the microstructures on the substrate surface of optical glass can be carried out as follows. A resist film is formed on the surface of optical glass substrate by coating the substrate with a conventional resist material used for microlithography. The coating procedure is not particularly limited, and it includes conventional procedures such as roll-coating, spin-coating and brushing. Then the resist film is exposed to light in an apparatus using, for example, electron irradiation to impart a predetermined pattern to the resist film.

Then an image area or a non-image area on the resist film is covered with a mask by vapor deposition of a metal such as chromium, and then, the resist film is processed with a solvent capable of dissolving the above-mentioned resist material whereby the area of resist film having no metal mask is dissolved away to thereby expose the optical glass surface. Then the optical glass is contacted with an etching gas capable of corroding the optical glass, such as, for example, HF, $C_4F_8$, $CH_2F_2$ and $O_2$, whereby micro-holes are formed on the surface of optical glass. Finally the resist film covered with metal mask is removed to form microstructures comprising micro-protrusions on the surface of optical glass.

In the case when the optical glass substrate having micro-protrusions on the surface thereof is made into an optical member exhibiting no light-reflection, the micro-protrusions are preferably tapered. This tapering can be effected by subjecting the above-mentioned optical glass to side-etching at the step of contacting the optical glass with the etching gas. In the case when the optical glass substrate having micro-protrusions on the surface thereof is made into an optical member exhibiting birefringence, the micro-protrusions may or may not be tapered.

As a modification, the layer of resist pattern itself may be used as an anticorrosive mask when the optical glass substrate is etched with an etching gas, provided that the layer of resist pattern is not corroded with the etching gas use.

The pattern formation on the resist film can be conducted by using a light exposure apparatus such as the above-mentioned apparatus, or by other means such as, for example, EB (electron beam) exposure or laser beam exposure. The laser beam exposure includes a laser interferometric method, which is conventionally used for making a hologram and a diffraction grating. In the case of a diffraction grating, a linear arrangement can be attained, but, a planar arrangement can also be attained by adopting multiple exposure at different angles.

According to the laser interferometric method, the microstructures obtained are usually periodic. In contrast, according to the EB exposure method, a predetermined pattern information is memorized as digital data in a storage device, and the electron beams are scanned while on-off and intensity of the electron beams are modulated, and therefore the microstructures obtained may be either periodic or non-periodic. The EB exposing method and the laser exposing method have merits and demerits, and therefore, an adequate method and conditions should be chosen in consideration of the intended dimensions, object, productivity and other factors.

The formation of the microstructures on the surface of substrate of a plastic material can be carried out as follows. A mold having microstructures formed on the molding surface is made by, for example, an electroforming method using a mold which is made by a forming method adopted for forming microstructures on optical glass for the substrate in a manner as mentioned above. By a molding procedure such as injection molding or embossing using the microstructures-formed molding, periodic microstructures can be formed on a molded article (for example, sheet) of the plastic material. This procedure for forming the periodic microstructures on the molded article of plastic material is advantageous in that it is suitable for mass production and less costly.

The substrate of the optical member according to the present invention has a surface layer portion comprising a region containing fluorine atoms in an amount larger than that in the inner layer portion. By the term "surface layer portion" as used herein, we mean a portion spanning from a depth 1 nm apart from the outermost surface of the optical member, to a depth 10 $\mu$m, preferably 5 $\mu$m apart from the outermost surface thereof. The phrase "a surface layer portion comprising a region containing fluorine atoms in an amount larger than that in the inner layer portion" refers to that at least a part of the surface layer portion has been fluorinated.

The optical member according to the present invention is produced by a process comprising a step of exposing the above-mentioned optical glass substrate having microstructures to an atmosphere containing fluorine gas.

The production process according to the present invention will be specifically described with reference to Fig. 4.

Fig. 4 is a diagram illustrating an example of a reaction apparatus used in the production process according to the present invention. This reaction apparatus has a chamber 1 and a heating means 5 for controlling the temperature of the chamber 1. The chamber 1 is connected to a fluorine gas feed line 2 for feeding a fluorine gas into the chamber and an inert gas feed line 3 for feeding an inert gas into the chamber. An exhaust line 4 is connected to another part of the chamber 1 for exhaustion of gas. The chamber 1 has a space in which the above-mentioned substrate 6 is placed. The substrate 6 to be placed can have various shapes. The gas withdrawn through the exhaust line 4 can be, either as it is or after purification and separation, returned to the fluorine gas feed line and the inert gas feed line for re-use.

In the production process according to the present invention, when the substrate is exposed to a fluorine gas-containing atmosphere to introduce fluorine atoms therein, the size of the substrate varies to a slight extent. Therefore, a consideration should be taken for the size of substrate to be shaped, so that an optical member having a desired size is produced therefrom.

A preferred embodiment of the process for producing the optical member according to the present invention comprises a step of placing the substrate in an inert gas-containing atmosphere, or in the air under reduced pressure, prior to the step of exposing a surface of the substrate to a fluorine-gas containing atmosphere; and further comprises a step of again placing the substrate in an inert gas-containing atmosphere, or in the air under reduced pressure, after the step of exposing the substrate surface to a fluorine-gas containing atmosphere. That is, the preferred embodiment of the production process comprise the following three steps: (1) a step of placing the substrate in an inert gas-containing atmosphere, or in the air under reduced pressure, (2) a step of exposing a surface of the substrate to a fluorine-gas containing atmosphere, and (3) a step of placing the substrate again in an inert gas-containing atmosphere, or in the air under reduced pressure.

The above-mentioned three steps will be explained in detail.

(1) Step of placing the substrate having microstructures in an inert gas-containing atmosphere, or in the air under reduced pressure

This step (1) is not essential, but is preferable because the surface layer portion of the optical member can have the region containing a larger amount of fluorine atoms without in-plane distribution by conducting the step (1).

In the step (1), an optical glass substrate 6 is placed in a chamber 1. Then the chamber 1 is closed and a valve in an inert gas feed line 3 is opened to feed an inert gas into the chamber 1. The inert gas includes, for example, argon, nitrogen, helium, neon, krypton and xenon. Argon is preferably used in the present invention. The chamber 1 is preferably made of stainless steel or aluminum.

The atmosphere in the chamber 1 is substituted by an inert gas atmosphere, and then, the substrate 6 in the chamber 1 is preferably heated. By heating the substrate, moisture, oxygen and volatile ingredients contained in the substrate can be effectively removed. The heating temperature is usually in the range from 60 to 180°C, preferably from 80 to 130°C, as the temperature of the surface of substrate. The heating time is from 1 to 400 minutes, preferably from 2 to 300 minutes.

Instead of placing the substrate in an inert gas-containing atmosphere, the substrate can be placed in the air under reduced pressure. In the case when the substrate is placed in the air under reduced pressure, the pressure is usually not higher than 500 mmHg, preferably not higher than 100 mmHg. The lower limit of the pressure is 1 mmHg. If the pressure is reduced to an excessive extent, oil, moisture and other waste material tend to return from an exhaust line 4. The heating temperature is usually maintained in the range from 15 to 100°C. Simultaneously with the pressure reduction, a high-purity inert gas can be introduced whereby oxygen and moisture can be effectively removed. The time of maintaining the substrate under reduced pressure is in the range from 1 to 400 minutes, preferably from 1 to 300 minutes.

If oxygen and moisture are present in the substrate, the surface of the substrate tend to become hydrophilic in the succeeding step (2) . Therefore the content of oxygen and moisture should preferably be reduced in the step (1). The content of each of oxygen and moisture in the substrate is usually not larger than 1% by weight, preferably not larger than 100 ppm by weight, and more preferably not larger than 10 ppm by weight.

(2) Step of exposing a surface of the substrate to a fluorine-gas containing atmosphere

After completion of the step (1), a valve in the inert gas feed line 3 is closed, and, if desired, the chamber 1 is cooled. Then a valve in the fluorine gas feed line 2 is opened and, the valve in the inert gas feed line 3 is opened according to the need. Thereby a fluorine gas is fed into the chamber 1, and the atmosphere in the chamber 1 is substituted by a fluorine gas-containing atmosphere.

The fluorine gas-containing atmosphere may be composed only of fluorine gas, but is preferably composed of a fluorine gas diluted with an inert gas to proceed the reaction at a moderate rate. The fluorine gas-containing atmosphere is preferably substantially free from oxygen and moisture. More specifically the content of each of oxygen and moisture is preferably not larger than 100 ppm by weight, more preferably not larger than 10 ppm by weight and especially preferably not larger than 1 ppm by weight.

By exposing a surface of the substrate to a fluorine gas-containing atmosphere, a fluorine gas is gradually introduced from the surface of the substrate to the surface layer portion and further to the inner layer portion, whereby fluorine atoms are gradually introduced within the molecule and the content of fluorine atoms in the material constituting the substrate is increased. The depth of fluorine atoms permeated from the outermost surface of the substrate, and the content of fluorine atoms vary depending upon the concentration of fluorine gas, the temperature and the time.

The fluorine gas diluted with an inert gas contains a fluorine gas at a concentration usually in the range from 0.1 to 50% by weight, preferably from 0.1 to 30% by weight and more preferably from 0.1 to 20% by weight. The surface temperature of the substrate at which the surface of the substrate is placed in contact with fluorine gas is not particularly limited, but is usually maintained in the range from -50 to 150°C, preferably from -20 to 80°C and more preferably from 0 to 50°C. The contact time is usually in the range from 0.1 second to 600 minutes, preferably from 0.5 second to 300 minutes and more preferably from 1 second to 200 minutes. When the concentration of fluorine gas is high, the temperature is high or the contact time is long, the depth of permeated fluorine atoms becomes large, and the content of fluorine atoms in the substrate increases.

With an increase in the content of fluorine atoms, the refractive index of the fluorine atoms-introduced portion, especially the fluorine atoms-introduced surface layer portion, decreases. By appropriately selecting the concentration of fluorine gas, the temperature and the time, the substrate having a desired refractive index can be obtained. To reduce the light reflectivity, the difference between the refractive index of the surface layer portion and the refractive index of the inner layer portion (more specifically the difference between the refractive index in the outermost surface portion having the largest content of fluorine atoms and the refractive index in an inner layer portion having the fluorine atoms content of zero) is preferably at least 0.001, more preferably at least 0.01. When the concentration of fluorine gas is too high, or the contact temperature is too high and the contact time is too long, the polymer resin constituting the material constituting the substrate is deteriorated. Therefore the contact with fluorine gas should preferably be carried out in the above-mentioned ranges.

(3) Step of, after exposure to the fluorine gas-containing atmosphere, placing the substrate having been treated with fluorine gas, again in an inert gas-containing atmosphere, or in the air under reduced pressure

After a predetermined time elapses from the exposure to the fluorine gas-containing atmosphere, an inert gas feed line 3 is opened and a valve in a fluorine gas feed line 2 is closed whereby the chamber 1 is filled with an inert gas atmosphere. The inert gas includes those which are mentioned in the above-mentioned step (1). The substrate 6 is preferably heated by a heating means 5. By heating, excessive fluorine gas not having introduced in the substrate can be removed. The heating temperature is usually in the range from 60 to 180°C, preferably from 80 to 130°C, as the temperature of the substrate surface. The heating time is from 1 to 400 minutes, preferably from 1 to 300 minutes.

Instead of placing the substrate in an inert gas-containing atmosphere, the substrate can be placed in the air under reduced pressure. In the case when the substrate is placed in the air under reduced pressure, the pressure is usually not higher than 500 mmHg, preferably not higher than 100 mmHg. The lower limit of the pressure is 1 mmHg. If the pressure is reduced to an excessive extent, oil, moisture and other waste material tend to return from the exhaust line. When the substrate is placed in the air under reduced pressure, the heating temperature is usually maintained in the range from 15 to 100°C. Simultaneously with the pressure reduction, a high-purity inert gas is preferably introduced whereby fluorine gas not having been introduced can be effectively removed. The time of maintaining the substrate under reduced pressure is in the range from 1 to 400 minutes, preferably from 1 to 300 minutes.

The step (3) is not essential, but is preferable because the surface layer portion of the substrate can have the region containing a larger amount of fluorine atoms without in-plane distribution by conducting the step (3).

After completion of the step (3) , the optical member is taken from the chamber, and can be applied for various uses.

As explained above, the substrate of the optical member according to the present invention has a surface layer portion having fluorine atoms introduced therein and has a controlled birefringence. Therefore, even if the antireflection property, double refraction and other properties attained by the microstructures formed on the surface of substrate are influenced by dust or other factors in the course of manufacture, transportation and assembling, the influence is reduced, and the deterioration with time of optical properties such as reflectivity and retardation is minimized.

The optical member according to the present invention is useful as a phase plate. As a preferable application thereof, a laminated phase plate can be mentioned which is made by laminating at least two phase plates comprised of the optical member, with a transparent adhesive. The phase plate exhibits a refractive index anisotropy within the plate and causes phase difference between the light beams divided by birefringence.

The optical member according to the present invention can be utilized, for example, as 1/2 wavelength plate and 1/4 wavelength plate. The 1/2 wavelength plate is used for deflecting linear polarized light or circularly polarized light. The 1/4 wavelength plate is used for converting linear polarized light to circularly polarized light, or converting circularly polarized light to linear polarized light. This phase plate can be utilized as a phase plate capable of giving a phase difference with 1/4 wavelength at a broadband, that is, as a member for making a broadband 1/4 wavelength plate.

Examples

The invention will now be described specifically by the following examples and comparative example. The invention is by no means limited by the examples.

Comparative Example 1

A 4-inches silicon wafer is coated with an electron beam resist "ZEP 7000" available from Zeon Corporation at a film thickness of 300 nm. The resist-coated wafer was processed by an electron beam drawing apparatus "ELS-5700" available from Elionix Co., Ltd., to exposed to the electron beam and develop circular cones each having a height of 250 nm and a bottom diameter of 200 nm in a 30 mm × 30 mm area, arranged with a square lattice pattern at a pitch of 300 nm. The thus obtained wafer having a pattern of microstructures on the surface thereof was subjected to nickel electroforming to make a stamper. The stamper was fitted to a plate of a press machine. A sheet with 1 mm thickness of a cycloolefin resin "ZNR 1060R" available from Zeon Corporation was heat-pressed at 200°C by the press machine having the stamper fitted thereto to transfer the square lattice structure of circular cones to the sheet.

The surface of cycloolefin resin sheet having the square lattice structure of circular cones was observed a scanning electron microscope "S-3000N" available from Hitachi Ltd. to determine the circular cone shape-retention ratio.

Light reflectivity was measured by using a spectrophotometer "V-570" available from JASCO Corporation, at a luminous flux aperture of 7 mm$\phi$ and a wavelength of 550 nm. The circular cone shape-retention ratio and the light reflectivity are shown in Table 1.

Example 1

A 4-inches silicon wafer is coated with an electron beam resist "ZEP 7000" available from Zeon Corporation at a film thickness of 300 nm. The resist-coated wafer was processed by an electron beam drawing apparatus "ELS-5700" available from Elionix Co., Ltd., to exposed to the electron beam and develop circular cones each having a height of 250 nm and a bottom diameter of 200 nm in a 30 mm × 30 mm area, arranged with a square lattice pattern at a pitch of 300 nm. The thus obtained wafer having a pattern of microstructures on the surface thereof was subjected to nickel electroforming to make a stamper. The stamper was fitted to a plate of a press machine. A sheet with 1 mm thickness of a cycloolefin resin "ZNR 1060R" available from Zeon Corporation was heat-pressed at 200°C by the press machine having the stamper fitted thereto to transfer the square lattice structure of circular cones to the sheet.

The cycloolefin resin sheet having the square lattice structure of circular cones on the surface thereof was placed in a chamber made of SUS316L. The resin sheet was maintained at a temperature of 120°C for 3 hours under a stream of high-purity argon having an oxygen content of below 1 ppb by weight and a moisture content of below 1 ppb by weight whereby oxygen and moisture were removed. The chamber was cooled to room temperature, and, a valve was turned to introduce a 1% fluorine gas which had been diluted with argon gas and had an oxygen content of below 1 ppm by weight and a moisture content of below 1 ppm by weight at 30°C, while care was taken so that oxygen and moisture were not introduced. When 15 minutes elapsed, a valve was turned to introduce high-purity argon gas having an oxygen content of below 1 ppb by weight and a moisture content of below 1 ppb by weight, and the resin sheet was maintained at 90°C for 1 hour to remove excessive fluorine gas.

The measurement of the fluorine gas-treated resin sheet by ESCA revealed that the surface layer portion contained a large amount of fluorine atoms. The fluorine gas-treated resin sheet was immersed in a ultra-pure water for 24 hours, and thereafter, the measurement by ESCA was conducted. The surface layer portion still contained a large amount of fluorine atoms, in the same manner as measured before the immersion in water. The analysis of the surface by FTIR-ATR method revealed the presence of a broad peak at 1,400 to 1,000 cm$^{-1}$ occurring due to C-F stretching vibration.

The circular cone shape-maintenance ratio of the fluorine gas-treated resin sheet and the light reflectivity thereof are shown in Table 1.

Example 2

A 4-inches silicon wafer is coated with an electron beam resist "ZEP 7000" available from Zeon Corporation at a film thickness of 300 nm. The resist-coated wafer was processed by an electron beam drawing apparatus "ELS-5700" available from Elionix Co., Ltd., to expose to the electron beam and develop circular cones each having a height of 250 nm and a bottom diameter of 200 nm in a 30 mm × 30 mm area, arranged with a square lattice pattern at a pitch of 300 nm. The thus obtained wafer having a pattern of microstructures on the surface thereof was subjected to nickel electroforming to make a stamper. The stamper was fitted to a plate of a press machine. A sheet with 1 mm thickness of a cycloolefin resin "ZNR 1060R" available from Zeon Corporation was heat-pressed at 200°C by the press machine having the stamper fitted thereto to transfer the square lattice structure of circular cones to the sheet.

The cycloolefin resin sheet having the square lattice structure of circular cones on the surface thereof was placed in a chamber made of SUS316L. The resin sheet was maintained at a temperature of 120°C for 3 hours under a stream of high-purity argon having an oxygen content of below 1 ppb by weight and a moisture content of below 1 ppb by weight whereby oxygen and moisture were removed. The chamber was cooled to room temperature, and, a valve was turned to introduce a 1% fluorine gas which had been diluted with argon gas and had an oxygen content of below 1 ppm by weight and a moisture content of below 1 ppm by weight at 30°C, while care was taken so that oxygen and moisture were not introduced. When 60 minutes elapsed, a valve was turned to introduce high-purity argon gas having an oxygen content of below 1 ppb by weight and a moisture content of below 1 ppb by weight, and the resin sheet was maintained at 90°C for 1 hour to remove excessive fluorine gas.

The measurement of the fluorine gas-treated resin sheet by ESCA revealed that the surface layer portion contained a large amount of fluorine atoms. The fluorine gas-treated resin sheet was immersed in a ultra-pure water for 24 hours, and thereafter, the measurement by ESCA was conducted. The surface layer portion still contained a large amount of fluorine atoms, in the same manner as measured before the immersion in water. The analysis of the surface by FTIR-ATR method revealed the presence of a broad peak at 1,400 to 1,000 $cm^{-1}$ occurring due to C-F stretching vibration.

The circular cone shape-maintenance ratio of the fluorine gas-treated resin sheet and the light reflectivity thereof are shown in Table 1.

Table 1

|  | Transfer of Circular Cone Shape | Light Reflectivity (%) |
|---|---|---|
| Example 1 | About 80% of the circular cones kept their original shape. About 20% of the circular cones were turned over or cracked | 1.2 |
| Example 2 | About 80% of the circular cones kept their original shape. About 20% of the circular cones were turned over or cracked | 0.8 |
| Comparative Example 1 | About 80% of the circular cones kept their original shape. About 20% of the circular cones were turned over or cracked | 3.0 |

If 100% of the circular cones are transferred without cracking or turnover, the light reflectivity theoretically becomes 0%. However, the circular cones are microstructures having a size of nm scale, and therefore, it is impossible that all of the circular cones keep their original shape at transfer. The microstructures of circular cones are easily turned over or cracked by friction or mechanical shock during transportation. Therefore, the light reflectivity in Comparative Example 1 is larger than the theoretical value as shown in Table 1.

The circular cone shape-maintenance ratios in Example 1 and Example 2 are the same as that in Comparative Example. However, the light reflectivities in Example 1 and Example 2 are smaller than that in Comparative Example because a fluorine gas treatment was conducted. As seen from comparison of Example 1 with Example 2, the light reflectivity varies depending upon the time of exposure to a fluorine-containing atmosphere.

Industrial Applicability

The optical member according to the present invention has microstructures which are not easily damaged nor stained with dust or others during manufacture or transportation, or at assembling step, and exhibits reduced deterioration with time in optical properties such as a refractive index and a retardation.

Due to these beneficial properties, the optical member according to the present invention is useful for display devices such as a liquid crystal display device, a CRT display device, a plasma display device and a projector display device, and optical elements such as a lens and a light guide plate.

Further, the optical member according to the present invention is useful as a phase plate. A preferable application thereof is a laminated phase plate made by laminating at least two phase plates comprised of the optical member, with a transparent adhesive.

**Claims**

1. An optical member utilizing diffraction, which comprises a substrate having a fine structure comprising microstructures with an interval from 50 to 1,000 nm between the adjacent microstructures on the surface of the substrate, wherein said substrate has a surface layer portion comprising a region containing fluorine atoms in an amount larger than that in the inner layer portion of the substrate.

2. The optical member according to claim 1, wherein the fine structure is a moth-eye structure.

3. The optical member according to claim 1, wherein the substrate has a refractive index in the range from 1.4 to 1.9 and the microstructures are micro-protrusions each tapering toward the tip in the direction perpendicular to the surface of the substrate.

4. A method for manufacturing an optical member utilizing diffraction, which comprises a step of exposing a surface of a substrate having a fine structure comprising microstructures with an interval from 50 to 1, 000 nm between the adjacent microstructures on the surface of the substrate, to an atmosphere containing a fluorine gas.

5. The method for manufacturing the optical member according to claim 4, wherein the fine structure is a moth-eye structure.

6. The method for manufacturing the optical member according to claim 4, wherein the substrate has a refractive index in the range from 1.4 to 1.9 and the microstructures are micro-protrusions tapering toward each tip in the direction perpendicular to the surface of the substrate.

7. The method for manufacturing the optical member according to claim 4, wherein the fluorine gas-containing atmosphere further contains an inert gas, and the concentration of fluorine gas is in the range from 0.1 to 50% by weight.

8. The method for manufacturing the optical member according to claim 4, wherein the content of each of oxygen and moisture in the substrate immediately before the step of exposing to the fluorine-gas containing atmosphere is not larger than 1% by weight.

9. The method for manufacturing the optical member according to claim 4, wherein the concentration of each of oxygen and moisture in the fluorine gas-containing atmosphere is not larger than 100 ppm by weight.

10. The method for manufacturing the optical member according to claim 4, wherein the surface of the substrate is exposed to the fluorine gas-containing atmosphere while the surface of the substrate is maintained at a temperature in the range from -50 to 150°C.

11. The method for manufacturing the optical member according to claim 4, which comprises a step of placing the substrate in an inert gas-containing atmosphere, or in the air under reduced pressure, prior to the step of exposing the substrate surface to a fluorine-gas containing atmosphere; and further comprises a step of placing the substrate again in an inert gas-containing atmosphere, or in the air under reduced pressure, after the step of exposing the substrate surface to the fluorine-gas containing atmosphere.

12. The method for manufacturing the optical member according to claim 4, which comprises a step of maintaining the substrate at a temperature in the range from 60 to 180°C in an atmosphere containing an inert gas, prior to the step of exposing the surface of the substrate to a fluorine-gas containing atmosphere; and further comprises a step of maintaining the substrate again at a temperature in the range from 60 to 180°C in an atmosphere containing an inert gas, after the step of exposing the substrate surface to the fluorine-gas containing atmosphere.

13. The method for manufacturing the optical member according to claim 4, which comprises a step of maintaining the substrate at a temperature in the range from 15 to 100°C in the air under reduced pressure, prior to the step of exposing the substrate surface to the fluorine-gas containing atmosphere; and further comprises a step of maintaining the substrate again at a temperature in the range from 15 to 100°C in the air under reduced pressure, after the step of exposing the surface of the substrate to the fluorine-gas containing atmosphere.

14. The method for manufacturing the optical member according to claim 4, which comprises a step of maintaining the substrate in the air under a pressure in the range from 1 to 500 mmHg, prior to the step of exposing the substrate surface to the fluorine-gas containing atmosphere; and further comprises a step of maintaining the substrate again in the air under a pressure in the range from 1 to 500 mmHg, after the step of exposing the substrate surface to the fluorine-gas containing atmosphere.

FIG. 1

FIG. 2

FIG. 3

FIG. 4

## INTERNATIONAL SEARCH REPORT

| | International application No. |
|---|---|
| | PCT/JP2005/006318 |

A. CLASSIFICATION OF SUBJECT MATTER
   Int.Cl$^7$  G02B5/18, G02B5/30, G02B1/10

According to International Patent Classification (IPC) or to both national classification and IPC

B. FIELDS SEARCHED

Minimum documentation searched (classification system followed by classification symbols)
   Int.Cl$^7$  G02B5/18, G02B5/30, G02B1/10

Documentation searched other than minimum documentation to the extent that such documents are included in the fields searched
   Jitsuyo Shinan Koho          1922-1996   Jitsuyo Shinan Toroku Koho   1996-2005
   Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2004-059329 A  (National Institute of Advanced Industrial Science and Technology), 26 February, 2004 (26.02.04), Par. Nos. [0002], [0003], [0008], [0009], [0011], [0020]; Fig. 1 (Family: none) | 1-10<br>11-14 |
| Y | JP 2004-039272 A  (Fuji Photo Film Co., Ltd.), 05 February, 2004 (05.02.04), Par. Nos. [0017] to [0019]; Fig. 4 (Family: none) | 1-10 |
| Y | JP 2003-294901 A  (Konica Corp.), 15 October, 2003 (15.10.03), Claims 1, 3, 9; Par. Nos. [0057], [0075], [0076], [0081], [0082] (Family: none) | 1-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   18 April, 2005 (18.04.05) | Date of mailing of the international search report<br>   10 May, 2005 (10.05.05) |
|---|---|
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/006318

C (Continuation).   DOCUMENTS CONSIDERED TO BE RELEVANT

| Category* | Citation of document, with indication, where appropriate, of the relevant passages | Relevant to claim No. |
|---|---|---|
| P | JP 2005-074774 A  (Konica Minolta Holdings Kabushiki Kaisha), 24 March, 2005 (24.03.05), Full text; all drawings (Family: none) | 1-7,10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5107412 A
- JP H9167758 A
- JP 2003207636 A
- JP 2003248118 A

**Non-patent literature cited in the description**

- **M. BORN ; E. WOLF.** *Principles of Optics*
- **S. J. WILSON ; M. C. HUTLEY.** *Octa. Acta.,* 1982, vol. 29, 993
- *Jpn. J. Appl. Phys.,* 2000, vol. 39, 735-737
- *Jpn. J. Appl. Phys.,* 2001, vol. 40, 747-749